# EUROPÄISCHE PATENTSCHRIFT

(11) **EP 2 908 996 B1**
(45) Veröffentlichungstag und Bekanntmachung des Hinweises auf die Patenterteilung: **17.04.2019**
(21) Anmeldenummer: 13777035.0
(22) Anmeldetag: 14.10.2013
(51) Int. Cl.: B29B 11/16, B29C 70/38, B29L 31/08

(54) **VERFAHREN UND VORRICHTUNG ZUR HERSTELLUNG VON VORFORMLINGEN ZUM HERSTELLEN EINES ROTORBLATTES**
METHOD AND DEVICE FOR PRODUCING PREFORMS FOR PRODUCING A ROTOR BLADE
PROCÉDÉ ET DISPOSITIF DE FABRICATION DE PRÉFORMES POUR LA FABRICATION D'UNE PALE DE ROTOR

(30) Priorität: 22.10.2012 DE 102012219267
(43) Veröffentlichungstag der Anmeldung: 26.08.2015
(73) Patentinhaber: Wobben Properties GmbH, 26607 Aurich (DE)
(72) Erfinder: SCHREIBER, Joachim, 21357 Bardowick/Lüneburg (DE); KANNENBERG, Johannes, 26603 Aurich (DE)
(74) Vertreter: Eisenführ Speiser
(86) Internationale Anmeldenummer: PCT/EP2013/071405
(87) Internationale Veröffentlichungsnummer: WO 2014/063944

(56) Entgegenhaltungen:
- EP-A1- 1 469 113
- EP-A1- 2 433 782
- WO-A1-2009/156157
- WO-A1-2011/047167
- DE-A1-102010 012 719
- GB-A- 2 487 050
- GRIMSHAW M N ED - MIRACLE & S L DONALDSON D B: "Automated tape laying", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 480 - 485, XP002591500, ISBN: 978-0-87170-703-1 das ganze Dokument

## Beschreibung

Die Erfindung betrifft ein Verfahren zum Herstellen eines Rotorblattes, bei dem ein Vorformling als textiles Halbzeug aus einer Anzahl von Flächengebilden von Strukturgelegematten hergestellt wird. Weiter betrifft die Erfindung eine Vorrichtung zum Herstellen von Vorformlingen zum Herstellen eines Rotorblattes.

Ein eingangs genanntes Verfahren wird regelmäßig als Handlegeverfahren durchgeführt. Eine Anzahl von Flächengebilden von Strukturgelegematten und anderer textiler Halbzeuge, wie Gewebe-, Gelege- oder Fasermatten, werden dabei von Hand in eine Form eingelegt. Gegebenenfalls werden Verstärkungen oder Sandwich-Materialen eingebracht. Das so dargestellte Faserhalbzeug kann unmittelbar mit Kunstharz getränkt werden; es hat sich bevorzugt, ein derartig hergestelltes textiles Halbzeug zu fixieren und weiter, zur Darstellung einer Matrix, mittels einer Vakuuminfusion mit einem Kunstharz oder sonstigem Duroplastes und/oder Elastomer und/oder Thermoplast zu tränken. Das vorgenannte Handlegeverfahren findet insbesondere Anwendung zum Herstellen von Rotorblättern für eine Windkraftanlage. Das textile Halbzeug wird als Vorformling im genannten Handlegeverfahren in einem Formteil gefertigt, entformt und bevorzugt einer anschließenden Vakuuminfusion zum Tränken des Halbzeugs überführt.

Problematisch dabei kann sein, dass die manuell ausgelegten Strukturgelegematten nur mit vergleichsweise hohem Aufwand fixiert werden können. Ein Handlegeverfahren lässt sich nur bedingt einem Qualitätsmanagement oder einer Prozessoptimierung unterziehen. Insbesondere erweist sich eine Automatisierung des Verfahrens bislang als höchst problematisch. Leichter automatisierbare Verfahren zur Darstellung von Faserverbundwerkstoffen, wie Spritzgussverfahren oder Sheet-Moulding, für einen Faserverbund der Größe eines Rotorblattes wie bei einer Windenergieanlage können nicht zum Einsatz kommen. Wünschenswert ist ein automatisiertes Verfahren zum Herstellen eines Vorformlings zum Herstellen eines Rotorblattes.

Aus dem Stand der Technik bekannt sind grundsätzlich Verfahren zur Darstellung von Strukturgelegen im Konzept. Diese sehen einen Zuschnitt im Rahmen einer Gelegekonstruktion vor, wobei das zugeschnittene Gewebe anschließend mit einer Greifereinrichtung gegriffen, vereinzelt und positioniert wird, um auf einem Band oder Ablagetisch fixiert zu werden mit anderen Strukturgelegen; danach ist die Ansammlung von zusammengefügten Strukturgelegen nochmals zu transportieren und in eine Form zu bringen sowie danach zu assemblieren. Ein solches im Grundsatz bekanntes Verfahren eignet sich nicht zur Anwendung bei Großbauteilen wie einem Rotorblatt für eine Windkraftanlage.

Die Dokumente GB 2 487 050 und EP 2 433 782 offenbaren ein automatisiertes Verfahren (sowie eine Vorrichtung) zum Herstellen eines Rotorblattes, bei dem ein Vorformling als textiles Halbzeug aus einer Anzahl von Flächengebilden von Strukturgelegematten hergestellt wird.

An dieser Stelle setzt die Erfindung an, deren Aufgabe es ist, ein Verfahren und eine Vorrichtung zum Herstellen eines Rotorblattes anzugeben, bei dem ein Vorformling als textiles Halbzeug aus einer Anzahl von Flächengebilden von Strukturgelegematten hergestellt wird.

Die Aufgabe dieses Verfahrens wird durch ein Verfahren der eingangs genannten Art gelöst, das erfindungsgemäß die Schritte aufweist:
- Bereitstellen eines Formteil für den Vorformling in einem Gelegeportal;
- Bereitstellen einer Strukturgelegematte in aufgerollter Form des Flächengebildes auf einer Gelegerolle;
- automatisiertes Ausrollen der Strukturgelegematte;
- automatisiertes Auftragen eines Klebstoffs auf der Strukturgelegematte in dem Formteil im Gelegeportal.

Insbesondere kann in einer Weiterbildung vorgesehen sein, dass das automatisierte Ausrollen unter Abrollen der Gelegerolle über dem Formteil und unter Abwickeln des Flächengebildes von der Gelegerolle und unter gleichzeitigem Einlegen der Strukturgelegematte in das Formteil im Gelegeportal erfolgt.

Besonders bevorzugt erfolgt das Bereitstellen einer Strukturgelegematte unter Anbringen der Gelegerolle an einer Rollwerkzeughalterung des Gelegeportals. Insbesondere erfolgt das Auftragen eines Klebstoffs unter Einbringen des Klebstoffs in einen Klebstoffapplikator an einer Klebwerkzeughalterung des Gelegeportals.

Das Konzept der Erfindung, insbesondere unter Berücksichtigung der vorgenannten Weiterbildungen, führt auch auf eine Vorrichtung zum Herstellen von Vorformlingen zum Herstellen eines Rotorblattes mittels der ein Vorformling als textiles Halbzeug aus einer Anzahl von Flächengebilden von Strukturgelegematten herstellbar ist und die mit einem Gelegeportal gebildet ist. Erfindungsgemäß weist diese auf:
- Eine Aufnahme zum Bereitstellen eines Formteils für den Vorformling in dem Gelegeportal ;
- eine Rollwerkzeughalterung, ausgebildet zum Bereitstellen einer Strukturgelegematte in aufgerollter Form des Flächengebildes auf einer Gelegerolle und ausgebildet zum automatisierten Ausrollen der Strukturgelegematte in dem Formteil im Gelegeportal;
- eine Klebewerkzeughalterung, ausgebildet zum automatisierten Auftragen eines Klebstoffs auf der Strukturgelegematte in dem Formteil im Gelegeportal;
- ein Leitsystem zum Führen der Werkzeughalterungen einzeln oder in Kombination über dem Formteil.

Die Erfindung geht von der Überlegung aus, dass das automatisierte Einbringen von Strukturgelegematten in ein Formteil eine Basis zum automatisierten Herstellen eines Vorformlings bietet. Die Erfindung hat darüber hinaus erkannt, dass ein automatisiertes Verfahren direkt am Formteil durchzuführen ist. Außerdem hat die Erfindung erkannt, dass eine Strukturgelegematte, insbesondere in Anbetracht einer Eignung zum Herstellen eines Rotorblattes, in aufgerollter Form des Flächengebildes auf einer Gelegerolle bereitzustellen ist.

Diesem Konzept folgend ist erfindungsgemäß vorgesehen, dass die Strukturgelegematte automatisiert ausgerollt wird und ein Klebstoff auf der Strukturgelegematte in dem Formteil im Gelegeportal automatisiert aufgetragen wird. Das Konzept der Erfindung erweist sich als überlegen gegenüber bisher grundsätzlich bekannten Automatisierungsansätzen, da Transportwege zum Herstellen des Vorformlings praktisch entfallen, denn dieser kann praktisch vollständig in dem Gelegeportal als Halbzeug fertiggestellt werden.

Vielmehr folgt das Konzept der Erfindung dem Ansatz, eine Anzahl von geeignet beweglichen Werkzeugen, wenigstens aber eine Rollwerkzeughalterung und eine Klebewerkzeughalterung, vorzusehen, um das automatisierte Ausrollen der Strukturgelegematte und das automatisierte Auftragen des Klebstoffs zu bewerkstelligen. Das Konzept lässt sich flexibel anwenden, je nach Bedarf auch unter Variation der Reihenfolge oder zeitgleicher Ausführung der Automatisierungsschritte. Außerdem zeigt sich, dass mit dem automatisierten Verfahren ein Qualitätsmanagement sowie eine Prozessoptimierung möglich ist. Insbesondere eignet sich das automatisierte Verfahren auch zur Einbindung in ein automatisiertes Magazinieren von zugeschnittenen Strukturgelegematten in aufgerollter Form im Vorfeld zum Bereitstellen der Strukturgelegematte.

Bevorzugte Weiterbildungen der Erfindung sind den Unteransprüchen zu entnehmen und geben im Einzelnen vorteilhafte Möglichkeiten an, das Konzept der Erfindung betreffend das Verfahren und die Vorrichtung mit weiteren Vorteilen weiterzubilden.

Bevorzugt lässt sich eine einzige Strukturgelegematte in aufgerollter Form auf einer Gelegerolle zur Verfügung stellen. Es kann jedoch auch mehr als eine Strukturgelegematte in aufgerollter Form jeweils eines Flächengebildes auf einer Gelegerolle bereitgestellt werden; dies reduziert den Aufwand zum Austauschen der Gelegerollen bzw. Einbringen einer Gelegerolle mit Strukturgelegematte und Ausbringen einer Gelegerolle ohne Strukturgelegematte.

Vor dem automatisierten Ausrollen der Strukturgelegematte bzw. nach einem ersten Teilausrollen der Strukturgelegematte und vor einem vollständigen Ausrollen der Strukturgelegematte hat es sich als vorteilhaft erwiesen, dass eine Strukturgelegematte an dem Formteil fixiert wird. Dies erweist sich jedenfalls dann als vorteilhaft, wenn es sich um die erste Strukturgelegematte handelt. Dadurch wird ein Verrutschen der Strukturgelegematte während des Ausrollvorgangs bis zum vollständigen Abwickeln des Flächengebildes von der Gelegerolle verhindert. So kann die Strukturgelegematte positionsgenau in das Formteil eingelegt werden.

Im Rahmen einer besonders bevorzugten Weiterbildung wird die eingelegte Strukturgelegematte gegen das Formteil und/oder gegen darunterliegende Strukturgelegematten des teilfertiggestellten Vorformlings angedrückt. Das Andrücken der eingelegten Strukturgelegematte kann vollflächig erfolgen oder je nach Bedarf auch nur in einer Teilfläche der Strukturgelegematte. Insbesondere hat sich ein Andrücken einer Teilfläche, wie an einem Randbereich oder einem Überlappbereich verschiedener Strukturgelegematten, als vorteilhaft erwiesen. Insbesondere umfasst die angedrückte Teilfläche der Strukturgelegematte solche Teilflächen, auf die ein Klebstoff aufgetragen ist. Das automatisierte Verfahren ist auch anwendbar in Bereichen des Vorformlings, der bei einem Handlegeverfahren nur schwer zugänglich ist, das sind üblicherweise Bereiche starker Krümmung des Formteils außerhalb der horizontalen Bereiche, das heißt insbesondere Wandbereiche des Formteils. Hier kann das Andrücken jeder Art von Eindrücken oder dergleichen Druckausübung umfassen.

Das Bereitstellen einer Strukturgelegematte umfasst insbesondere das Anbringen der Gelegerolle an einer Rollwerkzeughalterung des Gelegeportals. Das Auftragen eines Klebstoffs umfasst insbesondere das Einbringen des Klebstoffs in einen Klebstoffapplikator an einer Klebewerkzeughalterung des Gelegeportals.

Im Rahmen einer bevorzugten Weiterbildung wird eine erste Strukturgelegematte an einer zweiten Strukturgeiegematte in dem Formteil unter Auftragen des Klebstoffs fixiert. Je nach Automatisierungsgrad kann das Auftragen des Klebstoffs bevorzugt in einem Überlappbereich oder Randbereich jeder Strukturgelegematte erfolgen.

Insbesondere kann durch Wiederholen wenigstens der Schritte Abrollen und Auftragen für die Anzahl von Flächengebilden von Strukturgelegematten der Vorformling fertiggestellt werden. Dabei lassen sich Arbeitswege effizient aneinanderreihen, abwechseln oder vorteilhaft kombinieren. So kann je nach Bedarf ein unidirektionales, bidirektionales oder multidirektionales Gelege mit einer Anzahl von Strukturgelegematten dargestellt werden.

Insbesondere hat es sich im Rahmen einer ersten Variante als vorteilhaft erwiesen, dass das Ausrollen und Auftragen, insbesondere auch Andrücken, gleichzeitig in einem einzigen Arbeitsweg erfolgt. Das Gelegeportal weist dazu bevorzugt wenigstens eine Rollwerkzeughalterung und eine Klebewerkzeughalterung, vorzugsweise auch eine Andruckwerkzeughalterung, auf.

In einer zweiten Variante kann das Ausrollen und Auftragen, insbesondere auch Andrücken, in zwei Arbeitswegen erfolgen, insbesondere in einem Hin- und Her-Bewegen einer Werkzeughalterung. Dazu kann vorgesehen sein, dass nur eine einzige Werkzeughalterung am Gelegeportal vorgesehen ist, die aber unterschiedliche Werkzeuge, wie beispielsweise auswechselbare Rollwerkzeuge, Andruckwerkzeuge und/oder Klebewerkzeuge, aufweist. Da ein Klebewerkzeug grundsätzlich nur mit höherem Aufwand auswechselbar ist, hat es sich als vorteilhaft erwiesen, dass wenigstens zusätzlich zu einer Klebewerkzeughalterung eine weitere Werkzeughalterung, insbesondere eine Rollwerkzeughalterung und/oder eine Andruckwerkzeughalterung oder aber eine Werkzeughalterung mit einem auswechselbaren Rollwerkzeug und Andruckwerkezug, vorgesehen ist.

In einer bevorzugten Ausführungsform der erfindungsgemäßen Vorrichtung weist diese Sensormittel auf, die mit der Werkzeughalterung gemeinsam verfahrbar sind, und dazu eingerichtet, sind eine Zugspannung zu erfassen, die auf abgerollte, noch nicht angedrückte Strukturgelegemattenabschnitte wirkt. Hierdurch wird erreicht, dass die von dem Rollwerkzeug beim Abrollen der Strukturgelegematte ausgeübte Zugspannung überwacht werden kann. Zum erfolgreichen Abrollen der Strukturgelegematte ist es einerseits erforderlich, eine gewisse Zugspannung zu erreichen, damit es auf dem Formteil nicht zu Faltenbildung kommt. Andererseits darf die Zugspannung nicht zu groß sein, da sonst kein vernünftiges Anformen an das Formteil mehr möglich ist. Durch Überwachung der Zugspannung ist es möglich, diese auf einem vorbestimmten Wert zu halten, entweder manuell oder durch Steuerungs-bzw. Regelungstechnik unterstützt.

Weiter vorzugsweise weisen die Sensormittelabstandssensoren auf, welche zum Erfassen eines Durchhängens der abgerollten, noch nicht angedrückten Strukturgelegemattenabschnitte eingerichtet sind. Das Maß des Durchhängens ist ein Maß für die Höhe der Zugspannung; je geringer die Zugspannung ist, desto mehr hängt der freie Strukturgelegemattenabschnitt zwischen dem Rollwerkzeug und dem Formteil durch. Wenn Sensormittel wie beispielsweise Abstandssensoren einen bestimmten Abschnitt, beispielsweise einen immer gleichen Höhenabschnitt der Strukturgelegemattenabschnitte zwischen dem Rollenwerkzeug und dem Formteil abtasten, ändert sich mit dem Maß des Durchhängens der Abstand zwischen den Sensoren und dem Strukturgelegemattenabschnitt.

In einer weiteren bevorzugten Ausführungsform weist die erfindungsgemäße Vorrichtung eine oder mehrere Tänzerrollen auf, die derart an der Werkzeughalterung angeordnet sind, dass die von der Gelegerolle abgerollte Strukturgelegematte vor dem Andrücken gegen das Formteil ein- oder mehrfach umgelenkt wird, wobei vorzugsweise die eine oder mehreren Tänzerrollen Sensormittel zur Erfassung der Zugspannung aufweisen, welche auf abgerollte, noch nicht angedrückte Strukturgelegemattenabschnitte wirkt. Vorzugsweise sind die eine oder mehreren Tänzerrollen relativ zur Werkzeughalterung beweglich. Die Tänzerrollen können gemäß alternativer oder sich ergänzender Ausführungsformen passiv und/oder angetrieben beweglich sein. Bei einer Bewegung der Tänzerrolle durch Veränderung der Zugspannung auf die Strukturgelegemattenabschnitte, welche zwar abgerollt aber noch nicht angedrückt sind, ist eine Veränderung der Zugspannung erfassbar. Durch ein aktives Verfahren der Tänzerrollen relativ zur Werkzeughalterung ist ein Erhöhen oder Erniedrigen der auf die Strukturgelegemattenabschnitte wirkenden Zugspannung möglich, weil diese je nachdem, wo die Tänzerrolle sich befindet, unterschiedlich stark umgelenkt wird. Durch gesteuertes bzw. geregeltes Verfahren der Tänzerrollen ist somit auch eine Regulierung der Zugspannung möglich.

Im Rahmen einer ersten bevorzugten Ausführungsform kann beispielsweise in einer Hin- und Her-Abfolge von Arbeitswegen entlang einer Achse des Vorformlings für das Rotorblatt ein Auftragen eines Klebstoffs unmittelbar vor einem Ausrollen einer Strukturgelegematte erfolgen. Alternativ kann ein Auftragen eines Klebstoffs auch zusätzlich oder alternativ unmittelbar nach Andrücken einer Strukturgelegematte erfolgen.

In einer gegebenenfalls auch in Frage kommenden Ausführungsform kann ein Arbeitsweg nur unidirektional ausgeführt werden und sich mit einem Leerweg abwechseln. So kann immer in der gleichen Richtung unmittelbar nach einem Ausrollen einer Strukturgelegematte ein Klebstoff aufgetragen werden. In einer Alternative kann das Auftragen eines Klebstoffs auch unmittelbar vor dem Ausrollen einer Strukturgelegematte erfolgen, In der ersten Alternative hat es sich als vorteilhaft erwiesen, dass zusätzlich oder alternativ das Auftragen von Klebstoff unmittelbar nach Andrücken erfolgt. In der zweiten Alternative hat es sich als vorteilhaft erwiesen, dass zusätzlich oder alternativ das Auftragen eines Klebstoffs unmittelbar vor Andrücken der Strukturgelegematte erfolgt.

Als Andruckwerkzeug hat sich eine Andruckrolle, Walze, Fühler oder dergleichen als vorteilhaft erwiesen. Als Klebewerkzeug hat sich insbesondere ein Fassschmelzer für Klebstoff mit Heißleim oder dergleichen als vorteilhaft erwiesen.

Vorzugsweise sind der oder die Arme der Andruckwerkzeughalterung um mindestens eine, vorzugsweise um mehrere, Achsen schwenkbar an der Werkzeughalterung angeordnet. Alternativ oder zusätzlich sind vorzugsweise der oder die Arme dazu eingerichtet, das Andruckwerkzeug selbst um eine, vorzugsweise um mehrere, Achsen schwenkbar aufzunehmen.

Durch ein Schwenken der Arme der Andruckwerkzeughalterung oder ein Schwenken der an den Armen aufgenommenen Werkzeuge selbst wird das Anschmiegen der Arme an die Geometrie des Formteils deutlich verbessert. Zudem können sodann durch seitliches Versetzen der Andruckwerkzeughalterung bei hohen Formteilbreiten zuverlässig verschiedenste Formteilgeometrien zufriedenstellend abgefahren werden, ohne hierzu ein entsprechend der je nach Formteil stark variierenden Breite ein entsprechendes starres Andruckwerkzeug bereithalten zu müssen.

In einer weiteren bevorzugten Ausführungsform weisen die Andruckwerkzeughalterung und/oder der Arm bzw. die Arme Sensormittel zum Erfassen der ausgeübten Andrucckraft auf. Besonders bevorzugt ist es, dass die Andruckwerkzeuge relativ zu dem Formteil derart verfahrbar sind, dass ihr Abstand zu dem Formteil in Abhängigkeit von der erfassten Andruckkraft nachgeregelt werden kann, insbesondere mittels Erhöhen oder Verringern des Abstandes zwischen Formteil und Andruckwerkzeug, um die Andruckkraft in einem vorbestimmten Bereich zu halten. Durch Erhöhen der Andruckkraft wird bei konstanter Abrollgeschwindigkeit des Rollwerkzeuges die Zugspannung auf die Strukturgelegematte erhöht. Um ein möglichst konstanten Abrollverlauf zu gewährleisten, ist es vorteilhaft, die Andruckkraft durch gezielte Nachsteuern bzw. Nachregeln der Andruckwerkzeugposition nachzuführen. So wird auch bei sich ändernden Formteilgeometrien oder sich ändernden Strukturgelegemattentexturen immer eine im wesentlichen konstante Andruckkraft gewährleistet.

Zum Ausführen des erfindungsgemäßen Verfahrens weist die Vorrichtung eine Steuerung auf, die zum Bereitstellen einer virtuellen Darstellung des Vorformlings und automatisierten Bewegen einer Rollwerkzeughalterung zum Ausrollen der Strukturgelegematte und/oder zum automatisierten Bewegen einer Klebewerkzeughalterung zum Auftragen des Klebstoffes nach einem der virtuellen Darstellung zugeordneten und darauf abgestimmten Bewegungsmuster eingerichtet ist. Weiter ist Steuerung zum automatisierten Magazinieren und Entnehmen von Gelegerollen mit einem kontaktlos auslesbaren Identifikations- und/oder Sicherheitsmerkmal, insbesondere in Form eines RFID-Elements eingerichtet.

Das Leitsystem ist bevorzugt in Form eines Gestänges mit einer Fahrschiene gebildet; die Fahrschiene ist vorteilhaft einer äußeren Form des Formteils angepasst.

Im Rahmen der Erfindung weist das Verfahren weiter den Schritt auf: Bereitstellen einer virtuellen Darstellung des Vorformlings. Unter Nutzung der virtuellen Darstellung kann ein Werkzeug an einer Werkzeughalterung in einem darauf abgestimmten Bewegungsmuster bewegt werden. Insbesondere hat es sich als vorteilhaft erwiesen, dass die Rollwerkzeughalterung zum Ausrollen der Strukturgelegematte automatisiert nach einem der virtuellen Darstellung zugeordneten und darauf abgestimmten Bewegungsmuster erfolgt. Zusätzlich oder alternativ hat es sich als vorteilhaft erwiesen, dass eine Klebewerkzeughalterung zum Auftragen des Klebstoffs nach einem einer virtuellen Darstellung zugeordneten und darauf abgestimmten Bewegungsmuster erfolgt. So lassen sich Ausrollvorgänge effizient aneinanderreihen und zeitlich optimieren sowie Andruck- und Klebeschritte hinsichtlich Andruckkraft und Klebeapplikation, wie Temperatur, Klebermenge oder dergleichen, optimieren. Insgesamt kann das automatisierte Verfahren damit individuell angepasst auf die virtuelle Darstellung des Vorformlings variiert werden und in einem Qualitätsmanagement optimiert werden.

Im Rahmen einer weiteren besonders bevorzugten Weiterbildung ist vorgesehen, dass das Verfahren zum Herstellen des Rotorblattes eingebunden ist in ein automatisiertes Lager- und Produktionsverfahren. Bevorzugt ist vorgesehen, dass Gelegerollen automatisiert magaziniert und einem Magazin entnommen werden. Dazu hat es sich als vorteilhaft erwiesen, dass jede Gelegerolle mit einem kontaktlos auslesbaren Identifikations- und/oder Sicherheitsmerkmal versehen ist. Insbesondere eignet sich ein als RFID-Element bekanntes Identifikations- und/oder Sicherheitsmerkmal.

Ausführungsbeispiele der Erfindung werden nun nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus den Zeichnung unmittelbar erkennbaren Lehren wird auf den einschlägigen Stand der Technik verwiesen. Die Zeichnung zeigt in:
- Fig. 1: ein Ablaufschema für eine bevorzugte Ausführungsform eines Herstellungsverfahrens;
- Fig. 2: eine Ausführungsform eines Gelegeportals mit einer Rollwerkzeughalterung und einer Klebewerkzeughalterung in einer ersten Arbeitsstellung;
- Fig. 3: das Gelegeportal der Fig. 2 mit einer Rollwerkzeughalterung, die auch als Andruckwerkzeughalterung verwendbar ist unter Austauschen des Rollwerkzeugs durch ein Andruckwerkzeug - hier mit einem Andruckwerkzeug in Form von drei Rollen in einer zweiten Arbeitsstellung des Gelegeportals; und
- Fig. 4: eine schematische räumliche Detailansicht einer Rollwerkzeughalterung gemäß einer bevorzugten Ausführung.

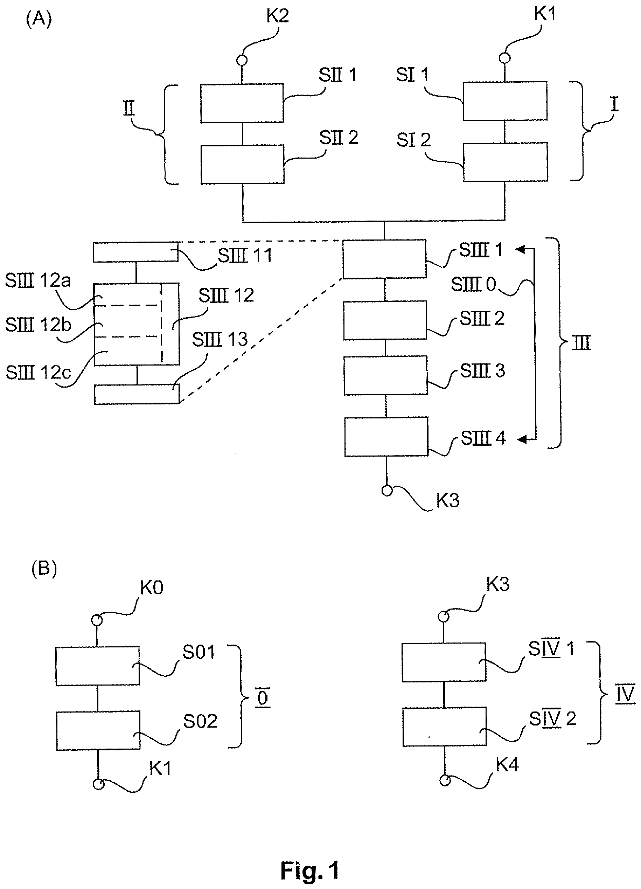

Fig. 1 zeigt schematisch ein Beispiel für einen bevorzugten Ablauf einer Ausführungsform eines Herstellungsverfahrens für einen Vorformling für ein Rotorblatt. In Ansicht (A) ist dazu der Kernprozess zum Herstellen des Vorformlings als textiles Halbzeug aus einer Anzahl von Flächengebilden von Strukturgelegematten dargestellt. In Ansicht (B) ist dargestellt, dass der vorgenannte Kernprozess eingebunden werden kann in einen bevorzugten automatisierten Ablauf einer Lagerhaltung bzw. Magazinierung unter Kennzeichnung der zugeschnittenen Strukturgelegematten. In Ansicht (C) ist dargestellt, wie der vorgenannte Kernprozess zur Darstellung des Vorformlings weitergeführt werden kann bei einer anschließenden Vakuuminfusion zur Tränkung des Vorformlings mit einem Harz.

Zunächst bezugnehmend auf Ansicht (A) der Fig. 1 wird in einem ersten Verfahrensabschnitt, ausgehend von einem Startpunkt K1, in einem ersten Verfahrensschritt SI1 eine Einlagerung einer Vielzahl von zugeschnittenen Flächengebilden von Strukturgelegematten vorgenommen. Die Einlagerung kann derart erfolgen, dass eine einzelne Strukturgelegematte auf einer einzelnen Gelegerolle aufgerollt ist. Die Einlagerung kann auch derart erfolgen, dass eine Anzahl von Strukturgelegematten in aufgerollter Form auf einer Gelegerolle aufgerollt ist; dies mit bekannter Reihenfolge. Im Schritt SI1 erfolgt das Identifizieren, gegebenenfalls mit einem Sicherheitsmerkmal versehene Entschlüsseln und Identifizieren, einer zu verwendenden Gelegerolle und das Auslagern derselben aus einem Magazin. In einem Schritt SI2 wird die ausgelagerte Gelegerolle mit dem Flächengebilde einer Strukturgelegematte an einer Rollwerkzeughalterung zum Ausrollen der Strukturgelegematte des Gelegeportals befestigt.

In einem parallel verlaufenden zweiten Verfahrensabschnitt I, ausgehend von einem Anschlusspunkt K2, ein Formteil für den Vorformling in einem Gelegeportal zur Verfügung gestellt. Dazu wird in einem ersten Verfahrensschritt SII1 das Formteil als Negativform an einer geeigneten Aufnahme des Gelegeportals befestigt. In einem zweiten Schritt SII2 wird zu dem Formteil eine virtuelle Darstellung in Form eines CAD-Modells oder dergleichen Datenstruktur die Abmaße des Vorformlings zur Verfügung gestellt. Die virtuelle Darstellung des Vorformlings umfasst insbesondere Position, Abmaße sowie Grenz- und Überlappbereiche der zur Darstellung des Vorformlings zu verwendenden Flächengebilden von Strukturgelegematten. Ein entsprechendes Linienmodell der vorgenannten Randüberlapp- oder Grenzbereiche kann als Vorlage für ein Bewegungsmuster dienen, das auf das vorgenannte Linienmodell abgestimmt ist, um in einem späteren Verfahrensschritt die Positionierung und Abrollbewegung einer Rollenwerkzeughalterung sowie die Positionierung und Dosierung für eine Klebewerkzeughalterung vorzugeben. Auch kann das vorgenannte Linienmodell als Vorlage für ein darauf abgestimmtes Bewegungsmuster für eine Andruckwerkzeughalterung dienen, mit entsprechender Positionierung für das Andruckwerkzeug und Druckwerte an den Positionen.

In einem dritten Verfahrensabschnitt III erfolgt das automatisierte Ausrollen der Strukturgelegematte in einem Schritt SIII1 am Gelegeportal. Am Gelegeportal erfolgt auch ein automatisiertes Andrücken der Strukturgelegematte an das Formteil oder an benachbarte oder darunterliegende Strukturgelegematten in einem Schritt SIII2. Im dritten Abschnitt III des Verfahrensablaufs erfolgt weiterhin im Schritt SIII3 das automatisierte Auftragen eines Klebstoffs auf der ausgerollten Strukturgelegematte in dem Formteil im Gelegeportal. In einem Schritt SIII4 kann die Gelegerolle als leere Celegerolle der Rollwerkzeughalterung des Gelegeportals wieder entnommen werden, nachdem die eine oder die Anzahl von Strukturgelegematten ausgerollt wurden. Die Schritte SIII1, SIII2, SIII3, SIII4 können in einer Schleife SIII0 mehrfach wiederholt werden, nämlich so lange, bis alle zur Darstellung des Vorformlings benötigten Strukturgelegematten ausgerollt, mit Klebstoff beauftragt und aneinander angedrückt sind. Ist der Vorformling fertiggestellt, kann in einem Knotenpunkt K3 der Vorformling für eine Weiterverarbeitung zur Verfügung gestellt werden.

Das im Schritt SIII1 angezeigte automatisierte Ausrollen der Strukturgeiegematte erfolgt regelmäßig unter Abrollen SIII11 der Gelegerolle über dem Formteil, während diese in der Rollwerkzeughalterung des Gelegeportals drehbar befestigt ist. Die Rollwerkzeughalterung kann zum Abwickeln in SIII12 eine entsprechende laterale Vorschubgeschwindigkeit über dem Formteil vorgeben als auch eine darauf abgestimmte Abrolldrehgeschwindigkeit der Gelegerolle über dem Formteil. Ist das Flächengebilde auf der Gelegerolle zu einem ersten Teil in S11112a abgerollt derart, dass es mit einem Anfangsstück am Formteil an der entsprechenden Position zu liegen kommt, kann dieses Anfangsstück am Formteil und/oder an einem benachbarten angrenzenden oder überlappenden Flächengebilde einer bereits ausgelegten Strukturgelegematte in SIII12 fixiert werden. Anschließend kann dann unter weiterem Abrollen der Gelegerolle das Flächengebilde von der Gelegerolle in SIII12b vollständig abgewickelt werden und dabei gleichzeitig in das Formteil im Gelegeportal in SIII12c eingelegt werden. In SIII13 löst sich die leere Gelegerolle von dem eingelegten Flächengebilde.

Einem Knotenpunkt K2 vorgelagert ist vorliegend die in Fig. 1B dargestellte automatisierte und identifizierte Einlagerung der Flächengebilde von Strukturgelegematten in aufgerollter Form auf eine Vielzahl von Gelegerollen. Dazu ist in einem vorgelagerten Verfahrensabschnitt 0, ausgehend von einem Knotenpunkt K0, jede Gelegerolle mit einem Identifizierungs- und/oder Sicherheitsmerkmal - hier in Form eines RFID-Elements - gekennzeichnet. Dadurch ist das Identifizierungs- und/oder Sicherheitsmerkmal kontaktlos abrufbar und an der Gelegerolle appliziert in einem Schritt S01. In einem Schritt S02 wird die so gekennzeichnete und wieder identifizierbare Gelegerolle eingelagert. Das automatisierte Magazinieren endet am Knotenpunkt K1, an den sich der vorgenannte erste Verfahrensabschnitt I des Kernprozesses anschließen kann.

Nach Abschluss des Kernprozesses kann am vorgenannten Knotenpunkt K3 der Vorformling zur Weiterverarbeitung, nämlich insbesondere für eine anschließende Vakuuminfusion, zur Tränkung des Vorformlings mit Harz oder einem anderen geeigneten Polymer, wie etwa elastomere Thermoplaste oder dergleichen, zur Darstellung der Matrix für die Strukturgelegematten weiterverarbeitet werden. Dazu wird in einem vierten Verfahrensabschnitt IV in einem Schritt SIV1 der Vorformling in eine Vakuumbehandlungsvorrichtung eingebracht und mit dem Matrixwerkstoff getränkt oder anderweitig imprägniert. In einem weiteren Verfahrensschritt SIV2 kann dann nach Auswertung von geeigneter Endbehandlung des Vorformlings eine Anzahl von Vorformlingen zu einem Rotorblatt assembliert werden. Das Verfahren zur strukturellen Herstellung eines Rotorblatts endet damit zunächst am Knotenpunkt K4.

Danach werden weitere Maßnahmen an der Struktur des Rotorblatts vorgenommen, etwa die Anbringung von Rotorblattanschlüssen, Blitzableitern, Anstrichen oder sonstigem Finish des Rotorblatts.

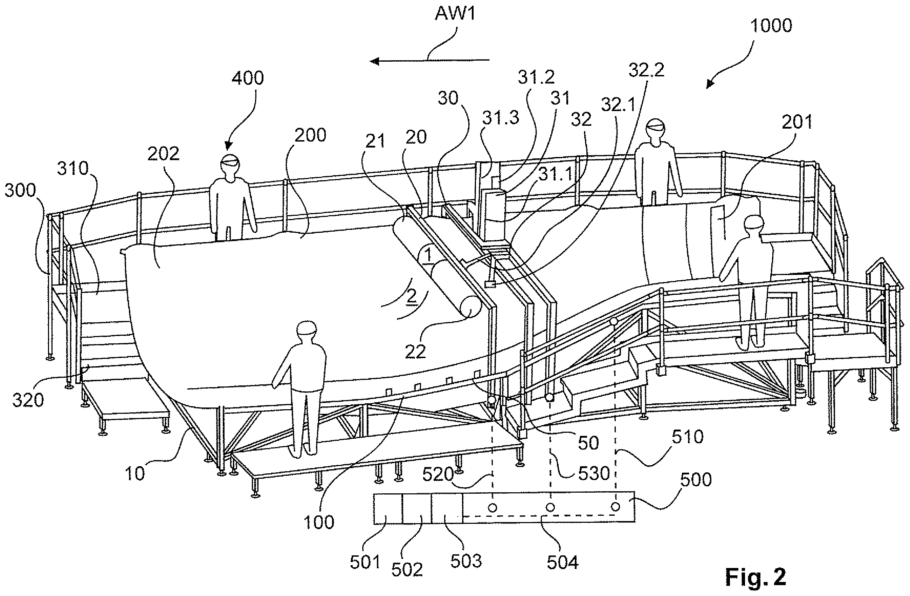

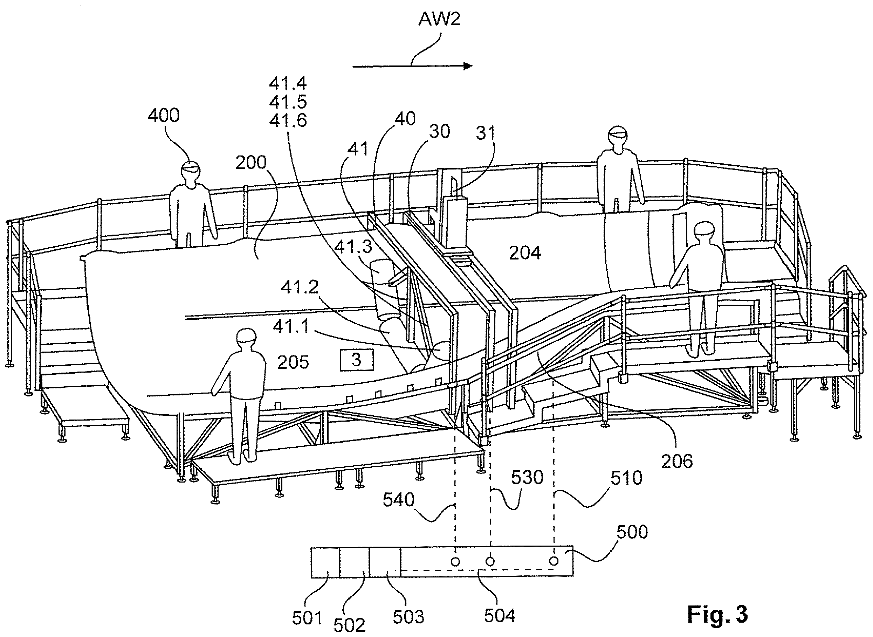

Zur Veranschaulichung insbesondere der vorgenannten Verfahrensschritte SIII1, SIII2 und SIII3 wird im Folgenden in Bezug auf Fig. 2 und Fig. 3 ein bevorzugtes Gelegeportal im Rahmen einer Ausführungsform beschrieben mit einer beispielhaft ausgeführten Rollwerkzeughalterung, Klebewerkzeughalterung und Andruckwerkzeughalterung.

Dazu zeigt Fig. 2 das Gelegeportal 100 mit einer hier als Gerüstkonstruktion ausgeführten Aufnahme 10 zum Bereitstellen eines Formteils 200 für einen Vorformling sowie einer Rollwerkzeughalterung 20 und einer Klebewerkzeughalterung 30. Fig. 3 ist außerdem eine Andruckwerkzeughalterung 40 zu entnehmen. Die Rollwerkzeughalterung 20 wird in Kombination mit der Klebewerkzeughalterung 30 und anschließend die Andruckwerkzeughalterung in Kombination mit der Klebewerkzeughalterung 30 verwendet. Im vorliegenden Fall einer Ausführungsform ist die Rollwerkzeughalterung und die Andruckwerkzeughalterung als eine Brücke gebildet, die zusammen mit einer ebenfalls leicht abgewandelt ausgebildeten Brücke für die Klebewerkzeughalterung 30 an einem schienenartig an das Formteil angepasstes Schienensystem 50 über das Formteil 200 hin- und hergefahren werden kann. Ein Rollwerkzeug 21 bzw. ein Andruckwerkzeug 41 kann an der Brücke jeweils zur Bildung der Rollwerkzeughalterung 20 bzw. der Andruckwerkzeughalterung auswechselbar angebracht werden.

Außerdem weist das Gelegeportal einen ebenfalls gerüstartig ausgebildeten Laufsteg 300 auf, der eine Anzahl von Plattformen 310 und Stufen 320 aufweist, um in geeigneter Weise einem Höhenverlauf des Vorformlings bzw. des Formteils angepasst zu werden. Auf dem Steg 300 besteht genügend Bewegungs- und Bearbeitungsraum für Bedienpersonal 400, das den automatisierten Prozess unterstützen, beobachten und gegebenenfalls fernsteuern kann bzw. auch manuell eingreifen kann für den Fall, dass die Beobachtung des automatisierten Prozesses dies als notwendig ergibt.

Das Formteil 200 in der hier gezeigten Ausführungsform stellt erkennbar die Negativform eines Rotorblattes, ausgehend von einem Rotorblatt-Anschlussbereich 201, bis etwa ein Drittel der Länge des Rotorblattes dar.

Das hier gezeigte Gelegeportal 1000 mit dem gerüstartig aufgebauten Werkzeugteil 100, umfassend die Werkzeughalterungen 20, 30, 40 sowie das Leitsystem 50, weist außerdem eine symbolisch dargestellte Steuerung 500 auf, die über entsprechende Steueranschlüsse und diesen zugeordneten Steuerleitungen 510, 520, 530, 540 ausgebildet ist, die Werkzeughalterungen und das Leitsystem in den programmierten Bewegungsvorgaben zu steuern und/oder zu regeln. Dazu ist in der Einrichtung zur Steuerung und/oder Regelung 500 ein Datenmodell zur virtuellen Darstellung 501 des Vorformlings hinterlegt als auch ein darauf abgestimmtes Linien- und/oder Kantenmodell zur Darstellung von Nähten, Überlappbereichen, Grenzbereichen oder sonstigen zur Anbringung von Klebelinien und -flächen geeignetes Strukturmodell. Ein solches Strukturmodell kann als Basis für ein darauf abgestimmtes und in der Einrichtung 500 hinterlegtes Bewegungsmuster 503 dienen, welches die Grundlage für die auf die Regel- und Steuerleitungen 510, 520, 530, 540 ausgegebenen Bewegungssignale dient. Dies ist in Fig. 2 und Fig. 3 durch entsprechende Datenflusslinien 504 zu den Steuer- und Regelleitungen 510, 520, 530, 540 dargestellt.

Das Konzept des vorliegend aus Fig. 2 und Fig. 3 erkennbaren Bewegungsablaufs besteht bei dieser Ausführungsform darin, ausgehend von einer Schmalseite des Formteils 200, hier die Nabenseite des Rotorblatts 201, gleichzeitig in einem ersten Arbeitsweg - hier als Hinweg bezeichnet - über die Rollwerkzeughalterung der Werkzeuganordnung 100 eine Strukturgelegematte einzulegen und im gleichen Arbeitsweg Klebstoff über die Klebwerkzeughalterung 30 auf der Strukturgelegematte an geeigneten Klebestellen - zum Beispiel folgend den Naht-, Grenz- oder Überlappbereichen gemäß dem Strukturmodell 502 - anzubringen. Die Hin-Bewegung des ersten Arbeitswegs ist vorliegend als AW1 in Fig. 2 angezeigt. Ein zweiter Arbeitsweg AW2 - hier als Rückweg oder Herbewegung - ist in Fig. 3 gezeigt. Während der erste Arbeitsweg vom Nabenbereich 201 zum Endbereich 202 des Vorformlings bzw. des Formteils 200 verläuft, verläuft der zweite Arbeitsweg AW2 vom Endbereich 202 des Formteils zum Nabenbereich 201 des Rotorblatts. Beim zweiten Arbeitsweg AW2 wird, wie in Fig. 3 dargestellt, optional nochmals Klebstoff auf der inzwischen eingelegten Strukturgelegematte aufgetragen und die Strukturgelegematte mit einem nachfolgenden Andruckwerkzeughalterung angedrückt.

Es ist zu verstehen, dass die hier beschriebene Hin- und Herbewegung mit dem angezeigten ersten und zweiten Arbeitsweg AW1, AW2 als gegenläufige Arbeitswege beispielhaft aufgeführt sind. Ebenso ist das Auswechseln des Rollwerkzeugs der Rollwerkzeughalterung 20 durch ein Andruckwerkzeug der Andruckwerkzeughalterung 40 im Endbereich 202 des Formteils zur Einleitung der Herbewegung beispielhaft gemeint. Ebenso kann beispielsweise vorgesehen sein, dass die Werkzeughalterungen 20, 30, 40 nebeneinander angebracht in dieser Reihenfolge in einem unidirektionalen ersten Arbeitsweg AW1 eine Strukturgelegematte einlegen, mit Klebstoff beauftragen und andrücken. Auch kann in einer abgewandelten Ausführungsform jeder Arbeitsweg nur unidirektional vorgenommen und nur unter Einlegen oder Andrücken der Strukturgelegematte. Beide Möglichkelten einer Ausführungsform können zur Darstellung eines Vorformlings kombiniert werden und je nach Bedarf eingesetzt werden in Bezug auf die individuellen Erfordernisse zur Anbringung einer Strukturgeiegematte innerhalb des Vorformlings. Gewisse Strukturgelegematten können beispielsweise mittels einer Hin- und Herbewegung eingelegt werden, andere vielleicht nur durch einen unidirektionalen Arbeitsweg. Letztlich ist die Art der Organisation von Arbeitswegen sowie entsprechender Bewegungsmuster für dieses Werkzeugsystem 100 dem abgestimmten Bewegungsmuster 503 vorbehalten, das die individuellen Bedürfnisse des Vorformlings aufgrund des Datenmodells 501 bzw. des Strukturmodells 502 für die Strukturgelegematten berücksichtigt.

Vorliegend weist die Werkzeughalterung 20 ein Rollwerkzeug 21 auf, derart, dass eine Gelegerolle 22 drehbar mit geeigneter, durch das Bewegungsmuster vorgegebener Abrollgeschwindigkeit gedreht bzw. am Leitsystem vorgeschoben werden kann. Auch sind in dem Bewegungsmuster 503 Start- und Stoppbewegungen zum Fixieren im Rahmen der Detailvorgänge zum Schritt SIII1 vorgegeben.

Darauf abgestimmt ist der Vortrieb der Klebewerkzeughalterung 30, die einen Klebstoffapplikator 31, vorliegend in Form eines Fassklebesystems zur Aufbringung von Klebstoff in Form von Heißleim, trägt. Der Klebstoff kann über ein Leitungssystem 32 mit vorliegend zwei Auftragarmen 32.1, 32.2 auf eine Strukturgelegematte an den durch das Bewegungsmuster 503 vorgegebenen Klebebereichen aufgebracht werden. Es eignen sich Heißschmelzklebstoffe auf PUR-Basis. Es eignet sich insbesondere auch jede andere Epoxy-Harz-Formullerung eines Klebstoffs, insbesondere wenn dieser frei von Ausheilungsagenzien oder Lösungsmitteln ist. Die Applikation des Klebstoffs erfolgt durch Aufsprühen oder Auffließen bei einer erhöhten Temperatur von regelmäßig oberhalb von 100°, während die Strukturgelegematten eine Temperatur üblicher Weise nicht oberhalb von 40° haben, also beispielsweise bei Raumtemperatur mit einer Klebstofftemperatur von etwa 115°C. Der Fassschmelzer des Klebstoffapplikators 31 kann in unterschiedlicher Ausführungsform und Abwandlung zur Verfügung gestellt werden. Es eignet sich auch ein aufgedoppeltes Fassschmelzersystem von wenigstens zwei Fassschmelzern, um einen kontinuierlichen Betrieb zu gewährleisten, wenn einer der Fassschmelzer entleert ist. Bevorzugte Klebstoffe sind, wie gesagt, reaktive Klebstoffe, wie PUR. Es zeigt sich, dass jedoch auch andere Klebstoffe geeignet sind. Der Klebstoffapplikator 31 weist in der hier dargestellten Ausführungsform eine Fassaufnahme 31.1 mit einem geeigneten Dosiersystem zur Bedienung des Leitungssystems 32 auf, beispielsweise einer geeigneten Druckkontrolle und Drehstrommotorik zur Dosiertätigkeit von Pumpen. Außerdem weist der Klebstoffapplikator eine geeignete Robotik 31.2 zur Positionierung und Handhabung der Komponenten als auch ein Steuer- und Bedienterminal 31.3 auf, das zudem die Stromversorgung und sonstige Bedien- und Logistik sowie Monitorvorgänge für den Klebstoffapplikator 31 sicherstellt. Die Bedienaktivitäten und Maschinenkonditionen lassen sich über 31.3 auch fernsteuern, ohne dass Bedienpersonal 400 direkt am Klebstoffapplikator 31 stehen müsste.

Fig. 3 zeigt eine automatisierte Bearbeitungssituation des Vorformlings nach eingelegter Strukturgelegematte in einem zweiten Arbeitsweg AW2. Der Arbeitsvorgang sieht ein nochmaliges Aufbringen von Klebstoff mit dem Klebstoffapplikator 31 an der Klebstoffwerkzeughalterung 30 vor. Dies ist jedoch nicht zwingend, jedoch gleichwohl optional, wenn zum Beispiel das Bedienpersonal 400 feststellt, dass beim ersten Arbeitsweg AW1 nicht ausreichend Klebstoff angebracht wurde; dies könnte im zweiten Arbeitsweg AW2 nachgeholt werden und nachfolgend anschließend über die Andruckwerkzeughalterung 40 die zuvor eingelegte Strukturgelegematte angedrückt werden an das Formteil 200 oder zuvor eingelegte angrenzende oder überlappende Strukturgelegematten. Eine erste, noch teilweise aufgerollte Strukturgelegematte 1 ist in Fig. 2 symbolisch gezeigt. Die teilweise abgewickelte und teilweise eingelegte Strukturgelegematte ist als 2 in Fig. 2 gezeigt, und die vollständig eingelegte und nun angedrückte Strukturgelegematte ist in Fig. 3 als 3 gezeigt.

Das Andruckwerkzeug 41 weist vorliegend eine Anzahl von drei Andruckrollen 41.1, 41.2, 41.3 auf, die jeweils an einem Arm 42.1, 42.2, 42.3 eines Haltesystems 42 drehbar gehalten sind. Das Armsystem bzw. jeder der Arme 42.1, 42.2, 42.3 weist auch entsprechende Aktuatoren auf, welche eine Andruckkraft der Rollen 41.1, 41.2, 41.3 auf die Strukturgelegematte 3 sowie gegebenenfalls andere Bereiche des Vorformlings in der Form 200 gemäß dem Bewegungsmuster 503 umsetzen.

Insbesondere im Bereich von Krümmungen des Formteils bzw. des Vorformlings wird von oben oder hier von der Seite, nämlich insbesondere durch Andruckrollen 41.1, 41.3, das Strukturgelege des teilweise fertiggestellten Vorformlings in die Krümmung, zum Beispiel die seitliche Wandkrümmung 204 bzw. 206, des Formteils hineingedrückt, um das Strukturgelege der Kontur des Formteils 200 optimal anzupassen. Dies gilt grundsätzlich auch für den weitgehend horizontal orientierten Bereich 205 des Formteils 200. Hier zeigt sich ein erheblicher Vorteil des automatisierten Verfahrens gegenüber manueller Ausführung eines Handgeleges. Zum einen ist es nicht mehr erforderlich, dass Bedienpersonal 400 auf dem Strukturgelege gehen oder kriechen muss; eine unvorteilhafte Druckausübung oder punktuelle Druckausübung ist damit vermieden. Außerdem sind stark gekrümmte oder hohe Bereiche, wie die Bereiche 204, 206, in Formteil 200 nunmehr mit gleicher Qualität bearbeitbar wie ein weitgehend horizontaler Teil 205 des Formteils 200; durch unterschiedliche Krümmung oder Orientierung vorgegebene Erreichbarkeitsunterschiede haben damit keinen Einfluss mehr auf die optimale Ausführung des Strukturgeleges; letztere wird nämlich vor allem durch Klebstoffauftrag und Andruckbedingungen beeinflusst.

Im Ergebnis hat die Einrichtung unter Einbindung eines CAD-Systems sowie Vorgabe des Bewegungsmusters 503 und des Strukturmodells 502 auf Grundlage eines CAD-Datenmodells 501 ganz erhebliche Vorteile bei Ausbau des Qualitätsmanagements und individueller Handhabung jedes einzelnen Vorformlings bzw. Formteils 200. Das Strukturgelege mit einer Anzahl von Flächengebilden der Strukturgelegematten kann somit in optimierter Weise an die Kontur des Vorformlings bzw. des Formteils 200 angepasst werden aufgrund der vorliegend bevorzugt beschriebenen Verfahrensautomatisierung und konstruktiven Vorgabe des Gelegeportals 1000. Außerdem zeigt sich, dass die hier beschriebene Ausführungsform besonders gut in einen größeren automatisierten Ein- und Auslagerprozess sowie eine insgesamt automatisierte Rotorblattfertigung eingebunden werden kann.

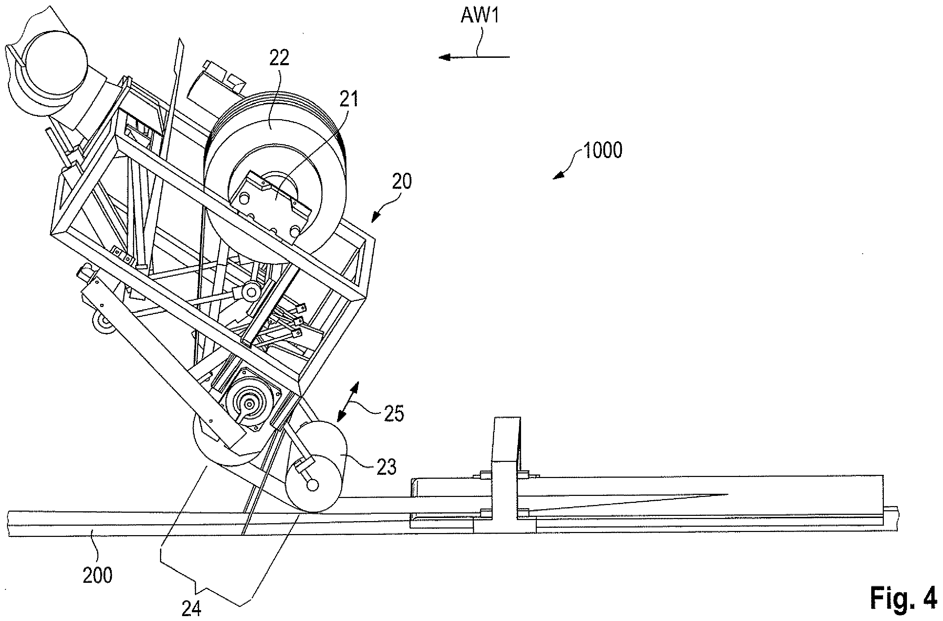

In Figur 4 ist ein Teil der erfindungsgemäßen Vorrichtung 1000 (Gelegeportal) in einer räumlichen Seitenansicht dargestellt. Gezeigt ist in Figur 4 ein Abrollvorgang der Strukturgelegematte in Richtung AW1. Gezeigt ist insbesondere eine an einem mehrachsig bewegbaren Roboterarm aufgenommene Variante des Rollwerkzeugs 21 an einer Werkzeughalterung 20. Die von dem Rollwerkzeug 21 gehaltene und abgerollte Gelegerolle 22 wird über eine Tänzerrolle 23 vor dem Erreichen des Formteils 200 umgelenkt. Hierbei hängt ein Strukturgelegemattenabschnitt 24 zwischen der Gelegerolle 22 und dem Formteil 200 durch. Die Tänzerrolle 23 ist in Richtung des Pfeils 25 beweglich, insbesondere schwenkbar und/oder translatorisch verfahrbar, um das Maß des Durchhängens in Abschnitt 24 variieren zu können. Optional weist die Werkzeughalterung 20 (nicht dargestellte) Sensormittel zum Erfassen der Zugspannung auf. Die (nicht dargestellten) Sensormittel erfassen entweder von einer ortfesten Anbringen an der Werkzeughalterung 20 aus den Abstand zu der Strukturgelegematte in dem Abschnitt 24, oder eine Position der Tänzerrolle 23. Vorzugsweise sind das Rollwerkzeug 21 und ein Antrieb der Tänzerrolle 23 signalleitend mit der Steuerung 500 verbunden (Datenverbindung nicht dargestellt), um die Abrollgeschwindigkeit des Rollwerkzeugs 21 und die Position der Tänzerrolle 25 so aufeinander abgestimmt zu regeln, dass die Zugspannung, die auf die Strukturgelegematte wirkt, in einem vorbestimmten Bereich bleibt. Der vorbestimmte Bereich der Zugspannung ist in Vorversuchen so zu wählen, dass es abhängig vom Material der Strukturgelegematte nicht zu einem Faltenwurf kommt, aber auch keine so hohe Zugspannung auftritt, dass ein Anformen der Strukturgelegematte an das Formteil erschwert oder verhindert wird.

## Patentansprüche

1. Verfahren zum Herstellen eines Rotorblattes (201), bei dem ein Vorformling als textiles Halbzeug aus einer Anzahl von Flächengebilden von Strukturgelegematten (24) hergestellt wird, vorzugsweise zur Verwendung bei einer anschließenden Vakuum-Infusion, mit folgenden Schritten:
- Bereitstellen eines Formteils (200) für den Vorformling in einem Gelegeportal (1000);
- Bereitstellen einer oder mehrerer Strukturgelegematten jeweils in aufgerollter Form des Flächengebildes auf einer Gelegerolle (22);
Bereitstellen einer virtuellen Darstellung des Vorformlings mittels einer Steuerung (500), wobei mittels der Steuerung ferner erfolgt:
automatisiertes Bewegen einer Rollwerkzeughalterung (20) zum Ausrollen der Strukturgelegematte und/oder automatisiertes Bewegen einer Klebewerkzeughalterung (30) zum Auftragen des Klebstoffes nach einem der virtuellen Darstellung zugeordneten und darauf abgestimmten Bewegungsmuster,
- automatisiertes Ausrollen der Strukturgelegematte, vorzugsweise unter Abrollen der Gelegerolle über dem Formteil, Abwickeln des Flächengebildes von der Gelegerolle und unter gleichzeitigem Einlegen der Strukturgelegematte in das Formteil im Gelegeportal;
- automatisiertes Auftragen eines Klebstoffes oder dergleichen Adhäsionsmittels auf der Strukturgelegematte in dem Formteil im Gelegeportal, und
- automatisiertes Magazinieren und Entnehmen von Gelegerollen mit einem kontaktlos auslesbarem Identifikations- und/oder Sicherheitsmerkmal, insbesondere in Form eines RFID-Elements..

2. Verfahren nach Anspruch 1, weiter aufweisend einen, mehrere oder sämtliche der Schritte:
Fixieren wenigstens einer Strukturgelegematte an dem Formteil, insbesondere nach einem ersten Teilausrollen und vor einem vollständigen Ausrollen; Andrücken der eingelegten Strukturgelegematte gegen das Formteil, insbesondere einer Vollfläche oder einer Teilfläche der Strukturgelegematte, wie einer Teilfläche in einem Randbereich, einem Überlappbereich, einem Anstossbereich oder einem sonstigen zur Nahtbildung zwischen der Strukturgelegematte und einer weiteren Strukturgelegematte vorgesehenen Bereich;
Anbringen der Gelegerolle an einer Rollwerkzeughalterung des Gelegeportals;
Einbringen des Klebstoffs in einen Klebstoffapplikator an einer Klebewerkzeughalterung des Gelegeportals; Fixieren einer ersten Strukturgelegematte an einer zweiten Strukturgelegematte in dem Formteil unter Auftragen des Klebstoffes;
Wiederholen wenigstens der Schritte Ausrollen und Auftragen für die Anzahl von Flächengebilden von Strukturgelegematten, insbesondere zur Bildung eines unidirektionalen, bidirektionalen oder multidirektionalen Geleges mit einer Anzahl von Strukturgelegematten.

3. Verfahren nach einem der vorgehenden Ansprüche, **dadurch gekennzeichnet, dass** das Ausrollen und Auftragen, insbesondere auch Andrücken, gleichzeitig in einem Arbeitsweg erfolgt.

4. Verfahren nach einem der vorgehenden Ansprüche, **dadurch gekennzeichnet, dass** das Ausrollen und Auftragen, insbesondere auch Andrücken, in zwei Arbeitswegen erfolgt, insbesondere in einem Hin- und Herbewegen einer Werkzeughalterung.

5. Verfahren nach einem der vorgehenden Ansprüche, **dadurch gekennzeichnet, dass** das automatisierte Ausrollen der Strukturgelegematte in einem Arbeitsweg ausgehend von einer Schmalseite eines Formteils erfolgt.

6. Vorrichtung zum Herstellen von Vorformlingen zum Herstellen eines Rotorblattes (201) mittels der ein Vorformling als textiles Halbzeug aus einer Anzahl von Flächengebilden von Strukturgelegematten (24) herstellbar ist, vorzugsweise zur Verwendung bei einer anschließenden Vakuum-Infusion, mit einem Gelegeportal (1000) aufweisend:
- eine Aufnahme zum Bereitstellen eines Formteils (200) für den Vorformling in dem Gelegeportal;
- eine Rollwerkzeughalterung (20) ausgebildet zum Bereitstellen einer Strukturgelegematte in aufgerollter Form des Flächengebildes auf einer Gelegerolle und ausgebildet zum automatisierten Ausrollen der Strukturgelegematte in dem Formteil im Gelegeportal;
- eine Klebewerkzeughalterung (30) ausgebildet zum automatisierten Auftragen eines Klebstoffes auf der Strukturgelegematte in dem Formteil im Gelegeportal,
- ein Leitsystem (50) zum Führen der Werkzeughalterungen einzeln oder in Kombination über dem Formteil, und eine Steuerung (500), die zum Bereitstellen einer virtuellen Darstellung des Vorformlings und automatisierten Bewegen einer Rollwerkzeughalterung zum Ausrollen der Strukturgelegematte, und/oder zum automatisierten Bewegen einer Klebewerkzeughalterung zum Auftragen des Klebstoffes nach einem der virtuellen Darstellung zugeordneten und darauf abgestimmten Bewegungsmuster eingerichtet ist, wobei die Steuerung zum automatisierten Magazinieren und Entnehmen von Gelegerollen mit einem kontaktlos auslesbaren Identifikations- und/oder Sicherheitsmerkmal, insbesondere in Form eines RFID-Elements, eingerichtet ist..

7. Vorrichtung nach Anspruch 6, weiter aufweisend eine Andruckwerkzeughalterung zum Andrücken der eingelegten Strukturgelegematte gegen das Formteil.

8. Vorrichtung nach einem der Ansprüche 6 oder 7, **gekennzeichnet durch** eine Werkzeughalterung mit auswechselbarem Werkzeug, nämlich einem auswechselbaren Rollwerkzeug, insbesondere Gelegerolle, und/oder einem auswechselbaren Andruckwerkzeug, insbesondere Andruckrolle, Walze, Fühler oder dergleichen und/oder einem auswechselbaren Klebewerkzeug angeschlossen an einem Klebstoffapplikator.

9. Vorrichtung nach Anspruch 8, **gekennzeichnet durch** Sensormittel, die mit der Werkzeughalterung gemeinsam verfahrbar sind, und dazu eingerichtet sind, eine Zugspannung zu erfassen, die auf abgerollte, noch nicht angedrückte Strukturgelegemattenabschnitte wirkt.

10. Vorrichtung nach Anspruch 9, wobei die Sensormittel Abstandssensoren aufweisen, welche zum Erfassen eines Durchhängens der abgerollten, noch nicht angedrückten Strukturgelegemattenabschnitte eingerichtet sind.

11. Vorrichtung nach Anspruch 9 oder 10, **gekennzeichnet, durch** eine oder mehrere Tänzerrollen, die derart an der Werkzeughalterung angeordnet sind, dass die von der Gelegerolle abgerollte Strukturgelegematte vor dem Andrücken gegen das Formteil ein- oder mehrfach umgelenkt wird, wobei vorzugsweise die eine oder mehreren Tänzerrollen Sensormittel zur Erfassung der Zugspannung aufweisen, die auf abgerollte, noch nicht angedrückte Strukturgelegemattenabschnitte wirkt.

12. Vorrichtung nach einem der Ansprüche 7 bis 11, **dadurch gekennzeichnet, dass** die Andruckwerkzeughalterung wenigstens einen Arm für ein Andruckwerkzeug wie eine Andruck-Rolle, -Walze, -Fühler oder dergleichen aufweist.

13. Vorrichtung nach Anspruch 12, **dadurch gekennzeichnet, dass** der oder die Arme der Andruckwerkzeughalterung um mindestens eine, vorzugsweise mehrere, Achsen schwenkbar an der Werkzeughalterung angeordnet sind, und/oder
dass der oder die Arme dazu eingerichtet sind, das Andruckwerkzeug um eine, vorzugsweise mehrere, Achsen schwenkbar aufzunehmen.

14. Vorrichtung nach Anspruch 12 oder 13, **dadurch gekennzeichnet, dass** die Andruckwerkzeughalterung und/oder der Arm bzw. die Arme Sensormittel zum Erfassen der ausgeübten Andruckkraft aufweisen, und vorzugsweise, dass die Andruckwerkzeuge relativ zu dem Formteil derart verfahrbar sind, dass ihr Abstand zu dem Formteil in Abhängigkeit von der erfassten Andruckkraft nachgeregelt werden kann, insbesondere mittels Erhöhen oder Verringern des Abstandes, um die Andruckkraft in einem vorbestimmten Bereich zu halten.

## Claims

1. Method of producing a rotor blade (201),
wherein a preform is produced as a semi-finished textile product from a number of material sheets of textured laid scrim mats (24), preferably for use in a subsequent vacuum infusion, comprising the following steps:
- providing a mould (200) for the preform in a laying frame (1000);
- providing at least one textured laid scrim mat of the material sheet in rolled up form on a laying roll (22);
- providing a virtual illustration of the preform by means of a control (500);
further performing by way of the control:
- automated movement of a roller tool holder (20) to roll out the textured laid scrim mat and/or automated movement of an adhesive tool holder (30) to apply the adhesive according to one of the movement patterns allocated to the virtual illustration and coordinated therewith;
- automated roll-out of the textured laid scrim mat, preferably while rolling out the laying roll above the mould, unwinding of the material sheet of the laying roll and while simultaneously inserting the textured laid scrim mat in the mould in the laying frame;
- automated application of a glue or a similar adhesive means on the textured laid scrim mat in the mould in the laying frame; and
- automated storing and removal of laying rolls with an identification and/or safety feature which can be read without contact, in particular in form of a RFID element.

2. Method according to claim 1, further comprising one, several or all of the step(s):
attaching at least one textured laid scrim mat to the mould, in particular after a first partial roll out and before a complete roll out; pressing the inserted textured laid scrim mat against the mould, in particular of a full area or partial area of the textured laid scrim mat, such as a partial area in an edge area, an overlap area, an adjacent area or another seam provided for between the textured laid scrim mat and another textured laid scrim mat;
attaching the laying roll to a roll tool holder of the laying frame; inserting of the adhesive into an adhesive applicator on an adhesive tool holder of the laying frame;attaching a first textured laid scrim mat to a second textured laid scrim mat in the mould through the application of the adhesive;
repeating of at least the steps of roll out and application for the number of material sheets of textured laid scrim mats, in particular to form a unidirectional, bidirectional or multidirectional layer with a number of textured laid scrim mats.

3. Method according to one of the above claims **characterized in that** the roll out and the application steps, in particular also the pressing steps are performed simultaneously in one instance.

4. Method according to one of the above claims **characterized in that** the roll out and the application is performed in two instances, in particular also in a back and forth movement of a tool holder.

5. Method according to one of the above claims **characterized in that** the automated roll out of the textured laid scrim mat is performed in one instance starting from a narrow side of the mould.

6. Apparatus for producing a rotor blade (201), through which a preform can be produced as a semi-finished textile product from a number of material sheets of textured laid scrim mats (24), preferably for use in a subsequent vacuum infusion with a laying frame (1000), comprising:
- a mount adapted to provide a mould (200) for the preform in the laying frame;
- a roll tool holder (20), designed to provide a textured laid scrim mat of the material sheet in rolled up form on a laying roll and designed for the automated roll-up of the textured laid scrim mat in the mould in the laying frame;
- an adhesive tool holder (30), designed for the automated application of an adhesive on the textured laid scrim mat in the mould in the laying frame.
- a guide system (50) to guide tool holders individually or in combination above the mould, and
- a control (500), which is adapted to provide a virtual illustration of the preform and an automated movement of a roll tool holder to roll out the textured laid scrim mat and/or an automated movement of an adhesive tool holder to apply the adhesive according to one of the movement patterns allocated to the virtual illustration and coordinated therewith, and
wherein the control is configured for an automated storing and removal of laying rolls having an identification and/or safety feature which can be read without contact, in particular in form of a RFID element.

7. Apparatus according to claim 6 further comprising a pressure tool holder to press the inserted textured laid scrim mat against the mould.

8. Apparatus according to claims 6 or 7, **characterized by** a tool holder with exchangeable tools, i.e. an exchangeable roll tool, in particular a laying roll, and/or an exchangeable press tool, in particular press roll, barrel, sensor or similar and/or an exchangeable adhesive tool connected to an adhesive applicator.

9. Apparatus according to claim 8, **characterized by** sensor means which are movable together with the tool holder and are adapted to record a tensile stress applied to rolled off, not yet pressed sections of the textured laid scrim mat.

10. Apparatus according to claim 9, wherein the sensor means comprise at least one distance sensor, adapted to record a sag of the rolled off, not yet pressed sections of the textured laid scrim mat.

11. Apparatus according to claim 9 or 10, **characterized by** one or several dancer rolls, which are arranged on the tool holder in such a way that the textured laid scrim mat rolled off from the laying roll is redirected at least once before it is pressed against the mould, whereby preferably the one or several dancer rolls comprise sensor means to record the tension, which affect the rolled off, not yet pressed sections of the textured laid scrim mat.

12. Apparatus according to claims 7 through 11, **characterized in that** the press tool holder comprises at least one arm for a press tool such as a press, roll, barrel, sensor or similar.

13. Apparatus according to claim 12, **characterized in that** the at least one arm of the press tool holder is arranged on the tool holder and pivotable about at least one, preferably several axes and/or
**in that** the at least one arm is adapted to hold the press tool pivotably about one, preferably about several axes.

14. Apparatus according to claim 12 or 13, **characterized in that** the press tool holder and/or the at least one arm has/have sensor means adapted to record the exercised pressing force and, preferably **in that** the press tools are movable relative to the mould such that their distance to the mould can be readjusted dependent on the recorded pressing force, in particular by means of increasing or decreasing the distance between the mould and the press tool to keep the pressing force in a predetermined range.

## Revendications

1. Procédé de fabrication d'une pale de rotor (201), dans lequel une préforme est fabriquée en tant que produit semi-fini textile à partir d'un nombre de structures planes de nappes de mats structuraux (24), de préférence pour l'utilisation lors d'une infusion sous vide subséquente, avec les étapes suivantes :
- mise à disposition d'un élément de moule (200) pour la préforme dans un portique de drapage (1000) ;
- mise à disposition d'une ou plusieurs nappes de mats structuraux respectivement sous forme enroulée de la structure plane sur un rouleau de drapage (22) ;
mise à disposition d'une représentation virtuelle de la préforme au moyen d'une commande (500),
dans lequel a lieu en outre au moyen de la commande :
le déplacement automatisé d'un porte-outil de roulage (20) pour le déroulement de la nappe de mats structuraux et/ou le déplacement automatisé d'un porte-outil de collage (30) pour l'application de l'adhésif selon un modèle de déplacement associé à la représentation virtuelle et accordé sur celle-ci,
- déroulement automatisé de la nappe de mats structuraux, de préférence par déroulement du rouleau de drapage au-dessus de l'élément de moule, dévidage de la structure plane du rouleau de drapage et par insertion simultanée de la nappe de mats structuraux dans l'élément de moule dans le portique de drapage ;
- application automatisée d'un adhésif ou moyen d'adhésion similaire sur la nappe de mats structuraux dans l'élément de moule dans le portique de drapage, et
- emmagasinage et retrait automatisés de rouleaux de drapage avec une caractéristique d'identification et/ou de sécurité lisible sans contact, en particulier sous la forme d'un élément RFID.

2. Procédé selon la revendication 1, présentant en outre une, plusieurs ou toutes les étapes de :
fixation d'au moins une nappe de mats structuraux sur l'élément de moule, en particulier après un premier déroulement partiel et avant un déroulement complet ; pression de la nappe de mats structuraux insérée contre l'élément de moule, en particulier d'une surface pleine ou d'une surface partielle de la nappe de mats structuraux, comme d'une surface partielle dans une zone de bord, une zone de chevauchement, une zone d'aboutement ou une autre zone prévue pour la formation d'un joint entre la nappe de mats structuraux et une autre nappe de mats structuraux ;
application du rouleau de drapage sur un porte-outil de roulage du portique de drapage ;
introduction de l'adhésif dans un applicateur d'adhésif au niveau d'un porte-outil de collage du portique de drapage ; fixation d'une première nappe de mats structuraux sur une deuxième nappe de mats structuraux dans l'élément de moule par application de l'adhésif ;
répétition d'au moins les étapes de déroulement et d'application pour le nombre de surfaces planes de nappes de mats structuraux, en particulier pour la formation d'une nappe unidirectionnelle, bidirectionnelle ou multidirectionnelle avec un nombre de nappes de mats structuraux.

3. Procédé selon l'une quelconque des revendications précédentes, **caractérisé en ce que** le déroulement et l'application, en particulier aussi la pression, ont lieu en même temps dans une course de travail.

4. Procédé selon l'une quelconque des revendications précédentes, **caractérisé en ce que** le déroulement et l'application, en particulier aussi la pression, ont lieu dans deux courses de travail, en particulier dans un mouvement de va-et-vient d'un porte-outil.

5. Procédé selon l'une quelconque des revendications précédentes, **caractérisé en ce que** le déroulement automatisé de la nappe de mats structuraux a lieu dans une course de travail partant d'un côté étroit d'un élément de moulage.

6. Dispositif de fabrication de préformes pour la fabrication d'une pale de rotor (201) au moyen duquel une préforme peut être fabriquée en tant que produit semi-fini textile à partir d'un nombre de structures planes de nappes de mats structuraux (24), de préférence pour l'utilisation lors d'une infusion sous vide subséquente, avec un portique de drapage (1000) présentant :
- un logement pour la mise à disposition d'un élément de moule (200) pour la préforme dans le portique de drapage ;
- un porte-outil de roulage (20) réalisé pour la mise à disposition d'une nappe de mats structuraux sous forme enroulée de la structure plane sur un rouleau de drapage et réalisé pour le déroulement automatisé de la nappe de mats structuraux dans l'élément de moule dans le portique de drapage ;
- un porte-outil de collage (30) réalisé pour l'application automatisée d'un adhésif sur la nappe de mats structuraux dans l'élément de moule dans le portique de drapage,
- un système de guidage (50) pour le guidage des porte-outils individuellement ou en combinaison au-dessus de l'élément de moule, et
une commande (500), qui est aménagée pour la mise à disposition d'une représentation virtuelle de la préforme et le déplacement automatisé d'un porte-outil de roulage pour le déroulement de la nappe de mats structuraux, et/ou pour le déplacement automatisé d'un porte-outil de collage pour l'application de l'adhésif selon un modèle de déplacement associé à la représentation virtuelle et accordé sur celle-ci, dans lequel
la commande est aménagée pour l'emmagasinage et le retrait automatisés de rouleaux de drapage avec une caractéristique d'identification et/ou de sécurité lisible sans contact, en particulier sous la forme d'un élément RFID.

7. Dispositif selon la revendication 6, présentant en outre un porte-outil de pression pour presser la nappe de mats structuraux insérée contre l'élément de moule.

8. Dispositif selon l'une quelconque des revendications 6 ou 7, **caractérisé par** un porte-outil avec outil échangeable, à savoir un outil de roulage échangeable, en particulier rouleau de drapage, et/ou un outil de pression échangeable, en particulier rouleau de pression, cylindre, sonde ou similaire et/ou un outil de collage échangeable raccordé à un applicateur d'adhésif.

9. Dispositif selon la revendication 8, **caractérisé par** des moyens de détection, qui sont déplaçables conjointement avec le porte-outil, et sont aménagés pour détecter une contrainte de traction qui agit sur des sections de nappe de mats structuraux déroulées, non encore pressées.

10. Dispositif selon la revendication 9, dans lequel les moyens de détection présentent des capteurs de distance, lesquels sont aménagés pour la détection d'un affaissement des sections de nappe de mats structuraux déroulées, non encore pressées.

11. Dispositif selon la revendication 9 ou 10, **caractérisé par** un ou plusieurs rouleaux danseurs, qui sont agencés au niveau du porte-outil de sorte que la nappe de mats structuraux déroulée du rouleau de drapage est renvoyée une ou plusieurs fois avant la pression contre l'élément de moule, dans lequel de préférence les un ou plusieurs rouleaux danseurs présentent des moyens de détection pour la détection de la contrainte de traction, qui agit sur des sections de nappe de mats structuraux déroulées, non encore pressées.

12. Dispositif selon l'une quelconque des revendications 7 à 11, **caractérisé en ce que** le porte-outil de pression présente au moins un bras pour un outil de pression tel un rouleau de pression, cylindre de pression, sonde de pression ou similaire.

13. Dispositif selon la revendication 12, **caractérisé en ce que** le ou les bras du porte-outil de pression sont agencés au niveau du porte-outil de manière pivotante autour d'au moins un, de préférence plusieurs, axes, et/ou
**que** le ou les bras sont aménagés pour recevoir l'outil de pression de manière pivotante autour d'un, de préférence plusieurs, axes.

14. Dispositif selon la revendication 12 ou 13, **caractérisé en ce que** le porte-outil de pression et/ou le bras ou les bras présentent des moyens de détection pour la détection de la force de pression exercée, et de préférence, que les outils de pression sont déplaçables par rapport à l'élément de moule de sorte que leur distance par rapport à l'élément de moule peut être rajustée en fonction de la force de pression détectée, en particulier par augmentation ou diminution de la distance pour maintenir la force de pression dans une plage prédéterminée.
